# EUROPÄISCHE PATENTSCHRIFT

(11) **EP 1 924 397 B1**
(45) Veröffentlichungstag und Bekanntmachung des Hinweises auf die Patenterteilung: **17.11.2010**
(21) Anmeldenummer: 06791727.8
(22) Anmeldetag: 30.08.2006
(51) Int. Cl.: B23Q 1/34, B23Q 1/58, B23Q 5/027

(54) **AKTOR ZUR BEWEGUNG EINES WERKZEUGES**
ACTUATOR FOR DISPLACING A TOOL
ACTIONNEUR SERVANT A DEPLACER UN OUTIL

(30) Priorität: 08.09.2005 DE 102005044087
(43) Veröffentlichungstag der Anmeldung: 28.05.2008
(73) Patentinhaber: Schott AG, 55122 Mainz (DE)
(72) Erfinder: OSTENDARP, Heinrich, 31073 Gruenenplan (DE)
(74) Vertreter: Gahlert, Stefan
(86) Internationale Anmeldenummer: PCT/EP2006/008467
(87) Internationale Veröffentlichungsnummer: WO 2007/028532

(56) Entgegenhaltungen:
- EP-A- 0 402 011
- DE-A1- 3 729 453
- DE-U1- 20 113 059
- DE-U1-202004 011 815
- JP-A- 2005 207 482
- US-A- 1 866 529
- US-A- 5 467 675
- US-A1- 2005 023 930
- US-A1- 2005 052 088

## Beschreibung

Die Erfindung betrifft einen Aktor zur Bewegung eines Werkzeuges, mit einem Gehäuse, an dem ein Stößel mit einem Schneidwerkzeughalter in Axialrichtung beweglich geführt ist, wobei der Stößel mittels einen schnellen Antriebs, vorzugsweise mittels eines Piezowandlers, beweglich ist, der gegen eine Rückstellkraft vorgespannt ist und vorzugsweise mittels eines Dämpfungselementes gedämpft ist.

Die Erfindung betrifft ferner eine Vorrichtung zur Bearbeitung von Werkstücken mittels eines derartigen Aktors.

Ein derartiger Aktor und eine derartige Vorrichtung sind aus der DE 20 2004 011 815 U1 bekannt.

Der bekannte Aktor wird bei einer Drehmaschine verwendet, um besonders fein strukturierte Oberflächen zu erzeugen, die rotationssymmetrisch sein können, insbesondere aber auch nicht rotationssymmetrisch ausgebildet sein können.

Die Drehmaschine weist hierzu eine um ihre Längsachse rotierend antreibbare Spindel auf, an der eine Aufnahme zum Einspannen eines Werkstückes vorgesehen ist, mit einem Aktor, der einen schnellen Antrieb, etwa in Form eines Piezoantriebs, zur Erzeugung einer schnellen Bewegung eines Werkzeugs in einer zur Werkstückoberfläche im Wesentlichen senkrechten Richtung aufweist, wobei der Aktor mittels eines weiteren Antriebes zur Erzeugung eines linearen Vorschubes in einer ersten Richtung entlang einer zu bearbeitenden Werkstückoberfläche positionierbar ist. Bei dem Aktor ist der schnelle Antrieb mit dem Werkzeug über eine Führungseinrichtung gekoppelt, die eine Zustellung des Werkzeugs in Axialrichtung des schnellen Antriebs entgegen einer Rückstellkraft erlaubt und in einer Ebene senkrecht dazu eine hohe Steifigkeit aufweist. Der Aktor weist eine luftdurchlässige Sintermetallplatte auf, die mittels eines eingeschlossenen Luftvolumens als Dämpfungselement wirkt, um die Auswirkungen des Schnittkraftrauschens im Betrieb des Aktors zu reduzieren.
Es hat sich im Betrieb gezeigt, dass mit einem derartigen Aktor mikrostrukturierte Oberflächen erzeugt werden können, selbst wenn harte Werkstoffe wie etwa Stahl oder andere Werkstoffe bearbeitet werden.

Ein weiterer Aktor ähnlicher Art und eine Vorrichtung zur Bearbeitung von Werkstücken mittels eines Aktors sind aus der Dissertation von Robert Hilbing mit dem Titel "Genauigkeitssteigerung von Präzisionsdrehmaschinen durch aktive Kompensation dynamischer Störungen" an der RWTH Aachen bekannt (Shaker Verlag, Band 16/2004, D82 Diss. RWTH Aachen).

Der Aktor wird in Verbindung mit einer Drehmaschine zur Erzeugung von hochwertigen rotationssymmetrischen Oberflächen verwendet. Der Aktor weist einen Piezoantrieb auf, der mittels einer Doppelmembranfeder in Axialrichtung beweglich geführt ist, in einer dazu senkrechten Richtung jedoch eine hohe Steifigkeit besitzt. Ein Werkzeughalter ist an einem Stößel aufgenommen, der einen Piezoantrieb umschließt und mit diesem unmittelbar verbunden ist. Der Piezoantrieb ist seinerseits mit einer Grundplatte verklebt, die durch ein Federpaket gegen den Piezoantrieb vorgespannt ist. Eine radiale Lagerung ist durch zwei voneinander beabstandete Membranfedern gebildet, an denen der Stößel aufgehängt ist.

Eine Dämpfung ist bei diesem Aktor nicht vorgesehen. Auch ist zur Erzeugung von fein strukturierten Oberflächen eine aktive elektronische Kompensation dynamischer Störungen notwendig, was auf Grund der zu unterdrückenden Feder-Masse-Eigenfrequenz des Aktors und die im Vergleich hierzu relativ lange Laufzeit der Sensor-Aktorstrecken, wenn überhaupt, dann nur mit hohem Aufwand möglich ist. Die bekannte Anordnung ist lediglich zur Bearbeitung von Buntmetallen, nicht jedoch zur Bearbeitung von harten Werkstoffen, wie etwa Stahl, geeignet.

Vor diesem Hintergrund liegt der Erfindung die Aufgabe zu Grunde, einen Aktor der eingangs genannten Art derart zu verbessern, dass eine möglichst schnelle Bearbeitung von harten Werkstoffen mit hoher Oberflächengüte ermöglicht ist. Auch soll der Aktor einen möglichst kompakten Aufbau erlauben.

Ferner soll eine Vorrichtung zur Bearbeitung von Werkstücken mit einem derartigen Aktor angegeben werden.

Diese Aufgabe wird bei einem Aktor gemäß der eingangs genannten Art dadurch gelöst, dass der Stößel mittels Rollkörpern am Gehäuse in Axialrichtung beweglich geführt ist, siehe Anspruch 1.

Die Aufgabe der Erfindung wird auf diese Weise vollkommen gelöst.

Durch die erfindungsgemäße Lagerung des Stößels mittels Rollkörpern wird nämlich eine sehr hohe Beschleunigung des Aktors ermöglicht und damit eine Werkstückbearbeitung mit hoher Schnittgeschwindigkeit. Ferner weist der erfindungsgemäße Aktor eine sehr hohe Steifigkeit in eine Ebene senkrecht zu seiner Axialrichtung auf.

Gemäß einer Weiterbildung dieser Ausführung ist der Stößel mittels der Rollkörper zwischen zwei Gehäuseteilen axial beweglich geführt, die gegeneinander verspannt sind.

Auf diese Weise können Relativbewegungen zwischen den Gehäuseteilen verhindert werden. Damit wird die Gefahr von Verschweißungen der Rollkörper bei hoher Belastung im Betrieb vermieden.

Die Rollkörper können hierbei etwa als Kugeln, Rollen oder Tonnenkörper oder in anderer Weise ausgebildet sein.

Gemäß einer Weiterbildung der Erfindung ist der schnelle Antrieb zumindest teilweise in einer Ausnehmung des Stößels aufgenommen, wobei das Dämpfungselement koaxial zum Stößel angeordnet ist.

Auch auf diese Weise lässt sich eine sehr hohe Beschleunigung und damit eine hohe Schnittgeschwindigkeit erzielen. Außerdem ergibt sich ein sehr kompakter Aufbau.

Unter einem "schnellen Antrieb" im Sinne dieser Anmeldung wird ein Antrieb verstanden, der eine schnelle gesteuerte Bewegung in Axialrichtung mit hoher Beschleunigung ausführen kann, in einer dazu senkrechten Ebene jedoch keine gesteuerte Bewegung ausführen kann und nur sehr geringe Kräfte aufnehmen kann.

Unter einem "schnellen Antrieb" im Sinne dieser Anmeldung ist somit ein Antrieb zu verstehen, der bei Ansteuerung mit einem geeigneten Steuersignal eine Bewegung mit einer hohen Beschleunigung erlaubt. Während Antriebe herkömmlicher Werkzeugmaschinen Beschleunigungen von maximal etwa 1,5 g (d.h. etwa 15 m/s²) erreichen, lassen sich mit Linearmotoren Beschleunigungen von maximal etwa 8 g (80 m/s²) erzielen.

Ein schneller Antrieb im Sinne dieser Erfindung erlaubt eine Beschleunigung, die deutlich größer ist und zumindest größer als 100 m/s² ist. Vorzugsweise erlaubt der schnelle Antrieb Beschleunigungen, die deutlich darüber liegen, beispielsweise mindestens 150 m/s², oder mindestens 500 m/s², insbesondere von mindestens 1000 m/s² betragen.

Derart hohe Beschleunigungen, die für hohe Schnittgeschwindigkeiten bei entsprechend anspruchsvollen Mikrostrukturen mit hohen Frequenzanteilen notwendig sind, lassen sich etwa mit elektromechanischen Wandlern, wie etwa Piezoantrieben erzielen.

In zusätzlicher Weiterbildung der Erfindung ist der schnelle Antrieb als Nanotube-Antrieb ausgebildet.

Bei einem Nanotube-Antrieb handelt es sich um einen elektromechanischen Wandler, der mindestens eine Nanotubes umfassende Schicht aufweist, wobei die Nanotubes in der Schicht gemittelt über die Nanotube-Anordnungen eine Vorzugsrichtung aufweisen.

Hierbei kann der Nanotube-Antrieb beispielsweise mindestens eine Schicht mit Single- oder Multiwall Carbon-Nanotubes oder mit Nanotubes aus anderen anorganischen Komponenten, wie etwa BN, MoS₂ oder V₂O₅, aufweisen. Grundsätzlich ist auch eine Stapelbauweise des Nanotube-Antriebs aus einzelnen Schichten möglich.

Mit Nanotubes lassen sich größere Kräfte erzeugen, als es mit Piezoantrieben der Fall ist. Auch besitzen Nanotubes praktisch kein Überschwingverhalten, was vorteilhaft ist, wenn die zu erzeugenden Mikrostrukturen sehr hochfrequente Anteile aufweisen. Der Nanotube-Antrieb kann etwa gemeinsam mit seinem Elektrolyten unmittelbar innerhalb eines Hohlraums des Stößels dichtend aufgenommen sein und zusätzlich durch eine Dichtung abgedichtet sein.

Eine Volumenausdehnung des Elektrolyten wird hierbei in eine Axialbewegung des Stößels umgesetzt.

Eine Ausführung mittels eines Piezoantriebs hat dagegen den Vorteil eines einfacheren Aufbaus und geringerer Kosten.

Daneben sind natürlich auch andere Ausführungsformen für den schnellen Antrieb denkbar, wie etwa ein hydraulischer Antrieb, soweit dieser die Anforderungen an die Beschleunigung und eine ausreichend hohe Steifigkeit erfüllt.

Durch die Verwendung eines Dämpfungselementes werden die Auswirkungen der Eigenresonanz erheblich reduziert und das Überschwingverhalten auf annehmbare Werte begrenzt.

Während hier grundsätzlich alle geeigneten Dämpfungselemente in Frage kommen, hat es sich gezeigt, dass bei einer Ausgestaltung des Dämpfungselementes als Squeeze-Film-Dämpfer sich eine besonders wirkungsvolle Dämpfung erzielen, die in optimaler Weise an die Anforderungen anpassbar ist, die an einen derartigen Aktor bei einer Verwendung zur Feinbearbeitung von Werkstücken aus harten Werkstoffen gestellt werden. Auch lässt sich unter Verwendung eines Squeeze-Film-Dämpfers ein besonders kompakter Aufbau des Aktors realisieren.

Es hat sich ferner gezeigt, dass die Dämpfung vorzugsweise so einzustellen ist, dass sich ein Dämpfungsfaktor von maximal etwa 0,7 ergibt. Werte darüber führen in der Regel zu schlechteren Ergebnissen. Je nach Art des zu bearbeitenden Materials, der Schnitttiefe, der Schnittgeschwindigkeit usw. können sich auch deutlich davon abweichende Dämpfungsfaktoren als optimal erweisen.

In vorteilhafter Weiterbildung der Erfindung ist der schnelle Antrieb innerhalb einer Ausnehmung des Stößels aufgenommen.

Auf diese Weise lässt sich ein besonders kompakter Aufbau des Aktors erzielen.

In weiter bevorzugter Ausgestaltung der Erfindung ist der Stößel an einem Festkörpergelenk, vorzugsweise an einer Doppelmembranfeder, geführt.

Auf diese Weise lässt sich eine gute Beweglichkeit des Stößels in Axialrichtung gleichzeitig mit einer hohen Steifigkeit in einer dazu senkrechten Richtung gewährleisten.

In weiter bevorzugter Ausgestaltung der Erfindung ist der schnelle Antrieb am Gehäuse festgelegt und der Stößel gegen den schnellen Antrieb mittels eines Federelementes vorgespannt, das beispielsweise als Federpaket ausgebildet sein kann.

Auf diese Weise lässt sich die notwendige Vorspannung des schnellen Antriebes gegen eine Rückstellkraft auf besonders kompakte Weise integrieren.

In weiter bevorzugter Ausgestaltung der Erfindung ist der Stößel im Bereich eines ersten werkzeugseitigen Endes des Stößels mittels einer ersten Federaufhahme und im Bereich eines zweiten Endes mittels einer zweiten Federaufnahme am Gehäuse in Axialrichtung beweglich aufgehängt.

Hierbei weist der schnelle Antrieb vorzugsweise ein festes Ende auf, das am Gehäuse festgelegt ist, sowie ein loses Ende, das mit dem Stößel fest verbunden ist.

Dabei ist ferner vorzugsweise der Stößel im Bereich seines zweiten Endes gegen den schnellen Antrieb vorzugsweise mittels eines Federpaketes vorgespannt.

Durch diese Maßnahmen lässt sich ein besonders kompakter Aufbau des Aktors realisieren.

Der Squeeze-Film-Dämpfer ist vorzugsweise in einem Hohlraum zwischen dem Gehäuse und dem Stößel angeordnet und besitzt vorzugsweise zwei koaxiale Flächen, zwischen denen ein Spalt gebildet ist, in dem ein Fluid eingeschlossen ist.

Auf diese Weise wird ein besonders kompakter Aufbau des Aktors unterstützt.

Hinsichtlich der Vorrichtung wird die Aufgabe der Erfindung durch eine Vorrichtung gemäß Anspruch 16 gelöst.

Es versteht sich, dass die vorstehend erwähnten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung eines bevorzugten Ausführungsbeispiels unter Bezugnahme auf die Zeichnung. Es zeigen:
- Figur 1: eine Vorrichtung zur Bearbeitung eines Werkstückes mittels eines erfindungsgemäßen Aktors in stark vereinfachter, schematischer Dar- stellung;
- Figur 2: einen Längsschnitt durch eine erste Ausführung eines erfindungsgemä- β en Aktors gemäß Figur 1;
- Figur 3: einen Längsschnitt durch eine weitere Ausführung eines erfindungsge- mäßen Aktors und
- Figur 4: einen Querschnitt durch den Aktor gemäß Figur 3 in verkleinerter Darstellung.

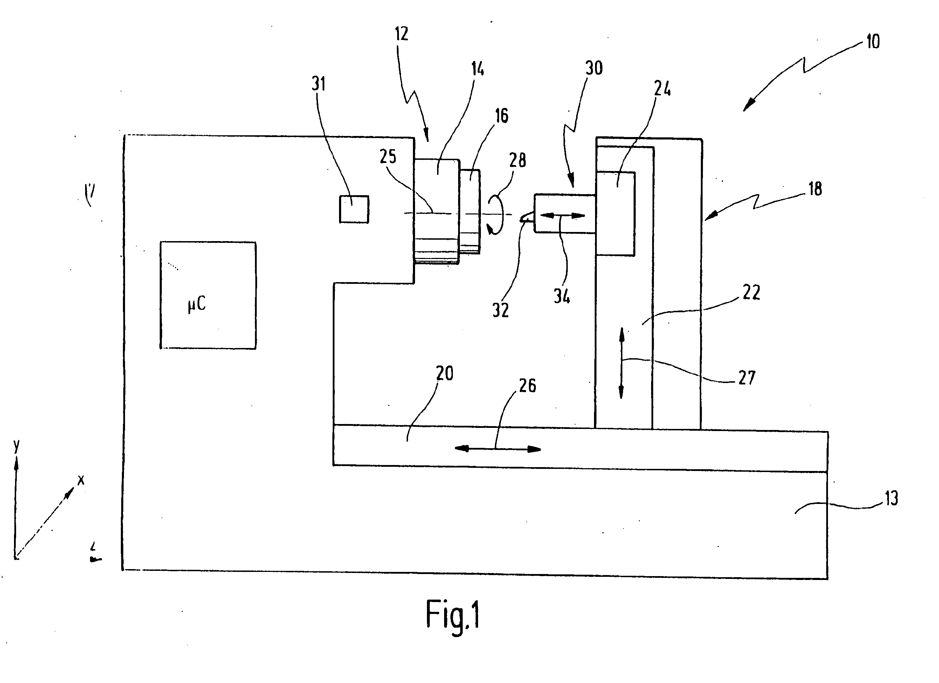

In Figur 1 ist eine Vorrichtung zur Bearbeitung eines Werkstückes mittels eines erfindungsgemäßen Aktors äußerst schematisch dargestellt und insgesamt mit der Ziffer 10 bezeichnet.

Bei der erfindungsgemäßen Vorrichtung 10 handelt es sich um eine Drehmaschine, die mit einem Aktor 30 ausgestattet ist, um eine schnelle, piezogesteuerte Bewegung eines Werkzeugs 32 im Bezug auf ein Werkstück 16 zu ermöglichen. Die Vorrichtung 10 weist eine Spindel 12 auf, die um ihre Spindelachse 25 rotierend antreibbar ist, wie durch einen Pfeil 28 verdeutlicht ist. An der Spindel 12 ist eine Aufnahme 14 in Form eines Spannfutters zum Spannen eines Werkstücks 16 vorgesehen.

Auf einem Maschinenbett 13 der Vorrichtung 10 ist ein Antrieb 20 entlang einer sich in z-Richtung (parallel zur Spindelachse 25) erstreckenden Führung vorgesehen, mittels derer ein Werkzeugschlitten 18 in z-Richtung verfahren werden kann, wie durch den Doppelpfeil 26 angedeutet ist. Am Werkzeugschlitten 18 ist ein Antrieb 22 vorgesehen, mittels dessen ein Schlitten 24 in Vertikalrichtung (y-Richtung) verfahren werden kann, wie durch den Doppelpfeil 27 angedeutet ist. Am Schlitten 24 ist ' schließlich ein weiterer Antrieb vorgesehen, der ein Verfahren in Horizontalrichtung (x-Richtung quer zur Spindelachse 25) ermöglicht.

Am Schlitten 24 ist schließlich der Aktor 30 aufgenommen, mittels dessen das Werkzeug 32 zusätzlich in z-Richtung verfahrbar ist, wie durch den Doppelpfeil 34 angedeutet ist.

Zur Steuerung der Drehmaschine und des Aktors ist eine zentrale Steuerung vorgesehen, die schematisch mit der Ziffer 17 angedeutet ist. Die Winkelstellung der Spindel 12 kann mittels eines Drehgebers 31 überwacht werden.

Die Vorrichtung 10 kann nun zur Mikrostrukturierung der Oberfläche eines Werkstücks 16 derart benutzt werden, dass das Werkstück 16 mittels der Spindel 12 um die Spindelachse 25 rotierend angetrieben wird, während der Aktor 30 mittels des Schlittens 24 in x-Richtung positioniert wird und das Werkzeug 32 mittels des Aktors 30 in Abhängigkeit von der über den Drehgeber 31 erfassten Winkelposition des Werkstückes 16 und von der Ortskoordinate des Aktors 30 in x-Richtung auf die Werkstückoberfläche zugestellt wird. Auf diese Weise kann eine Mikrostrukturierung der Werkstückoberfläche erreicht werden, wobei rotationssymmetrische und nichtrotationssymmetrische Oberflächenstrukturen mit hoher Präzision erzeugt werden können wie grundsätzlich aus der DE 20 2004 011 815 U1 bekannt ist, die durch Bezugnahme vollständig eingeschlossen wird.

Mit dem anhand von Figur 1 beschriebenen Aufbau lässt sich eine Bearbeitung von Werkstücken nach der Art des Plandrehens erreichen, das heißt das Werkstück wird rotierend angetrieben und das Werkzeug 32 wird quer zur Spindelachse vorwiegend in Horizontalrichtung (x-Richtung) bzw. radial zum Werkstück 16 bewegt, während die schnelle Zustellbewegung des Aktors 30 in z-Richtung, also in Richtung der Spindelachse 25, erfolgt. Zusätzlich sind natürlich Bewegungen in anderen Richtungen möglich, beispielsweise in z-Richtung zum Drehen von Konturen.

Es versteht sich, dass auch eine Werkstückbearbeitung nach der Art des Längsdrehens möglich ist. Hierzu erfolgt die Positionierbewegung für den Aktor 30 mittels des Antriebs 20 in z-Richtung, während der Aktor 30 eine Zustellbewegung in einer dazu senkrechten Ebene (x-/y-Ebene) ermöglicht. Zweckmäßigerweise ist hierzu der Aktor derart an dem Schlitten 24 positioniert, dass die Piezoachse in x-Richtung (oder ggf. in y-Richtung) ausgerichtet ist. Mit einer derartigen Anordnung könnte also eine Mikrostrukturierung eines Werkstücks an der Außenoberfläche (oder ggf. an der Innenoberfläche) nach der Art des Außenrunddrehens bzw. Innenrunddrehens durchgeführt werden.

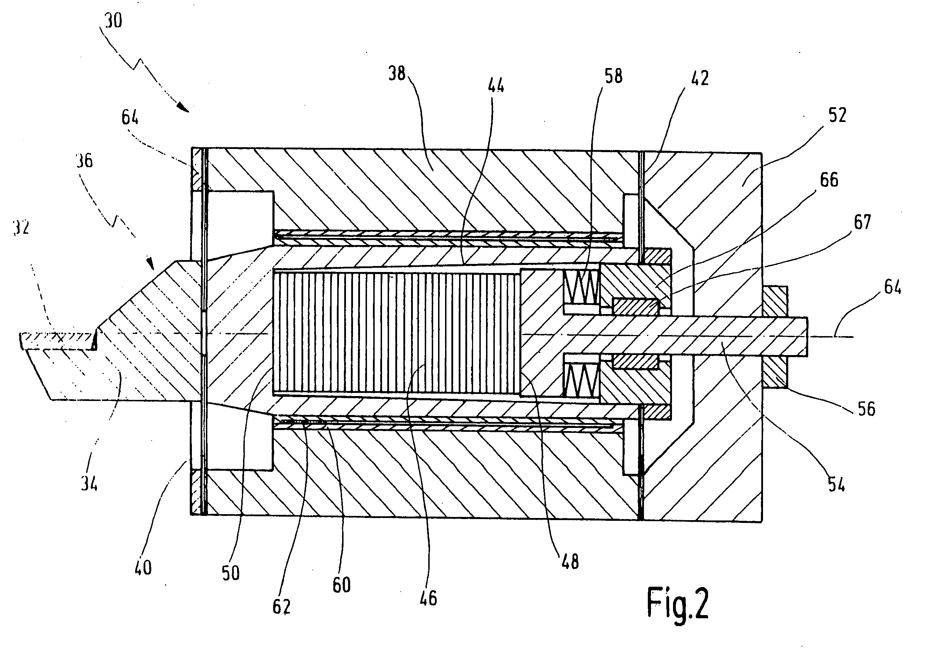

Der besondere Aufbau des Aktors, der gegen eine Rückstellkraft in Richtung der Piezoachse sehr schnell bewegbar ist, jedoch in einer zur Piezoachse senkrechten Ebene eine hohe Steifigkeit besitzt, wird im Folgenden anhand von Figur 2 näher beschrieben.

Der in Figur 2 dargestellte insgesamt mit der Ziffer 30 bezeichnete Aktor besteht im Wesentlichen aus einem schnellen Antrieb 36, vorzugsweise in Form eines Piezoantriebs, der an einem Gehäuse 38 aufgenommen ist und der über ein Festkörpergelenk bestehend aus einer ersten Federaufnahme 40 und einer zweiten Federaufnahme 42 auf ein Werkzeug 32 wirkt. Der schnelle Antrieb 36 ermöglicht lediglich eine Bewegung in Axialrichtung, kann jedoch in einer Ebene senkrecht dazu keine Stellkräfte erzeugen. Mittels des Festkörpergelenks 40, 42 wird gewährleistet, dass Stellbewegungen des schnellen Antriebs 36 in seiner Axialrichtung unmittelbar auf das Werkzeug 32 übertragen werden können, dass der gesamte Aktor 30 jedoch in einer Ebene senkrecht zu seiner Längsachse 64 eine hohe Steifigkeit aufweist.

Der Stößel 36 weist an seinem vorderen Ende einen Werkzeughalter 34 auf, der zur Aufnahme eines Werkzeugs 32, etwa in Form einer Wendeschneidplatte, ausgebildet ist. Dabei ist die Anordnung so getroffen, dass die Schnittfläche des Werkzeugs 32 durch die Längsachse 64 des Aktors 30 verläuft.

Der Stößel 36 ist an seinem werkzeugseitigen Ende mit der ersten Federaufnahme 40 verbunden, die etwa aus Blattfedern bestehen kann, die aus breitem Federstahl geringer Stärke bestehen, wie er etwa als Füllerlehrerband bekannt ist. Diese Blattfedern sind an ihren äußeren Enden am Gehäuse 38 fest eingespannt, kreuzen sich in der Mitte und sind mit dem Stößel 36 fest verbunden. Zur Befestigung am Gehäuse 38 kann beispielsweise ein ringförmiger Halter 64 vorgesehen sein.

Alternativ können die erste und zweite Federaufnahme 40, 42 auch in beliebiger anderer Weise ausgebildet sein, soweit die Anforderungen an die Dynamik des Aktors 10 erfüllt werden.

So könnten die Federaufnahmen 40, 42 beispielsweise auch als Tellerfedern ausgebildet sein.

Der Stößel ist im Bereich seines dem Werkzeughalter 34 abgewandten Endes an der zweiten Federaufnahme 42 festgelegt, die wie die erste Federaufnahme 40 ausgebildet ist und lediglich eine den geometrischen Verhältnissen angepasste Dimensionierung aufweist. Außen ist die zweite Federaufnahme 42 zwischen dem Gehäuse 38 und einem damit verbundenen hinteren Gehäuseteil 52 fest eingespannt.

Der Stößel 36 ist in seinem Bereich zwischen den beiden Federelementen 40, 42 hohlzylindrisch ausgebildet und läuft in Richtung zur Werkzeugaufnahme 34 hin leicht konisch zu. Der Stößel 36 weist einen zylindrischen Hohlraum 44 auf, innerhalb dessen der schnelle Antrieb 46 aufgenommen ist. Der schnelle Antrieb 46 wird so von der Wandung des Stößels 36 koaxial umschlossen. Der schnelle Antrieb 46 weist ein festes Ende 48 auf, das über eine geeignete Halterung 54 mit einer Verschraubung 56 mit dem Gehäuseteil 52 fest verbunden ist. Der schnelle Antrieb 46 weist ferner ein loses Ende 50 auf, das an der Stirnfläche des Hohlraums 44 anliegt. Der Stößel 36 ist ferner mit einer Halterung 66, mit der er am zweiten Federelement 42 befestigt ist, über ein Federpaket 58, etwa in Form von Tellerfedern, gegen die Halterung 54 und somit gegen den schnellen Antrieb 46 vorgespannt. Die Halterung 66 ist vorzugsweise gleichfalls zur Abdichtung des schnellen Antriebs 46 ausgebildet und kann hierzu eine gesonderte Dichtung 67 aufweisen.

Zur Dämpfung des Stößels 36 ist vorzugsweise ein Squeeze-Film-Dämpfer 60 vorgesehen, der zwischen einer Außenoberfläche des Stößels 36 und einem zylindrischen Hohlraum des Gehäuses 38 aufgenommen ist. Der Squeeze-Film-Dämpfer 60 weist zwei zueinander koaxiale Hülsen auf, zwischen denen ein dünner Ringspalt 62 gebildet ist, in dem ein Fluid eingeschlossen ist. Bei dem Fluid handelt es sich vorzugsweise um eine Flüssigkeit mit hoher Viskosität, wie etwa um ein Gel.

Gemäß einer alternativen Ausführung der Erfindung ist der schnelle Antrieb 46 als Nanotube-Antrieb ausgebildet. Bei sonst gleichem Aufbau wie bei Figur 2, ist lediglich statt des Piezoantriebs ein Nanotube-Antrieb in der Ausnehmung des Stößels aufgenommen. Da der Nanotube-Antrieb einen Elektrolyten aufweist, in dem die weitgehend axial ausgerichteten Nanotubes angeordnet sind, ist durch geeignete Abdichtungsmaßnahmen sicherzustellen, dass der Elektrolyt nicht aus dem Hohlraum 44 des Stößels 36 ausläuft, in dem der Nanotube-Antrieb aufgenommen ist. Hierzu kann ein weiteres Dichtungselement vorgesehen sein (nicht dargestellt). Zum Aufbau des Nanotube-Antriebs, der beispielsweise als in Stapelbauweise aufgebauter Carbon-Nanotube-Antrieb ausgebildet sein kann, sei im Einzelnen auf die WO 2004/030210 A1 hingewiesen, die hier vollständig durch Bezugnahme eingeschlossen wird.

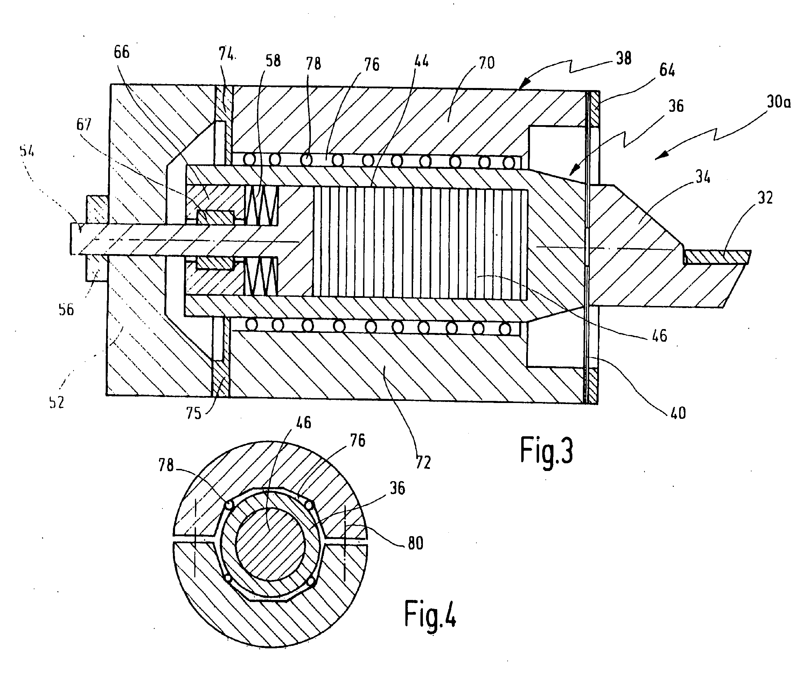

Eine weitere Ausführung des erfindungsgemäßen Aktors ist in den Fig. 3 und 4 dargestellt und insgesamt mit der Ziffer 30a bezeichnet. Hierbei werden für entsprechende Teile entsprechende Bezugsziffern verwendet.

Der Aktor 30a gemäß Fig. 3 verwendet zur Führung in Axialrichtung ein Rollenlager zwischen dem Stößel 36 und dem Gehäuse 38. Hierdurch wird eine sehr hohe Steifigkeit in Verbindung mit einer noch besseren Dynamik erzielt. Das Rollenlager kann etwa Kugeln 78 aufweisen, die in einem Hohlraum 76 zwischen der Außenoberfläche des Stößels 36 und dem Gehäuse 38 geführt sind. Das Gehäuse besteht hierbei aus einer oberen Gehäusehälfte 70 und einer unteren Gehäusehälfte 72, die mit hoher Kraft durch geeignete Spannschrauben miteinander derart verschraubt sind, dass Relativbewegungen zwischen den Gehäusehälften 70, 72 vermieden werden. So kann die Gefahr von Reibverschweißungen im Bereich der Kugeln 78 vermieden werden.

Da die Axialführung durch das Rollenlager gewährleistet ist, entfällt bei dieser Ausführung die zweite Federaufnahme 42, während die Federaufnahme 40 wie bei der Ausführung gemäß Fig. 2 zur Erzeugung der Rückstellkraft in Axialrichtung dient.

Die Rollkörper oder Kugeln 78 sind an den jeweiligen Gehäusehälften 70, 72 durch Deckelteile 74, 75 gegen Herausfallen aus dem Hohlraum 76 gesichert.

Eine Verdrehsicherung kann durch das aus Tellerfedern bestehende Federpaket 58 gewährleistet werden. Alternativ könnten die Rollkörper oder Kugeln 78 auch mit Führungsflächen, z.B. Abflachungen auf der Außenoberfläche des Stößels 38 zwecks einer Verdrehsicherung zusammen wirken.

Es versteht sich, dass an Stelle von Kugeln beliebige andere geeignete Rollkörper verwendet werden können, beispielsweise Zylinderrollen, Tonnenkörper oder dgl.

Der schnelle Antrieb 46 kann wiederum etwa als Piezoantrieb oder als Nanotube-Antrieb ausgebildet sein.

Mit einem derartigen Aktor lässt sich eine noch höhere Eigenresonanzfrequenz als bei der Ausführungsform gemäß Fig. 2 erzielen, so dass die Dynamik weiter verbessert wird.

Auch bei dieser Ausführung ist ein geeignetes Dämpfungselement vorgesehen, um das Überschwingverhalten zu verbessern und die Standzeit bei der Bearbeitung von harten Werkstücken, wie etwa aus Stahl bestehenden Werkstücken, zu verbessern. Das Dämpfungselement kann gleichfalls als Squeeze-Film-Dämpfer ausgebildet sein.

Durch die Dämpfung wird eine sonst bei der Eigenresonanzfrequenz auftretende etwa 10- bis 12-fache Überhöhung der Amplitude bei einer Nennamplitude von 10 µm auf eine etwa zweifache Überhöhung begrenzt.

## Patentansprüche

1. Aktor zur Bewegung eines Werkzeuges, mit einem Gehäuse (38), an dem ein Stößel (36) mit einem Werkzeughalter (34) in Axialrichtung beweglich geführt ist, wobei der Stößel (36) mittels einen schnellen Antriebs (46) der eine Beschleunigung erlaubt, die größer als 100 m/s² ist, beweglich ist, der gegen eine Rückstellkraft vorgespannt ist, **dadurch gekennzeichnet, dass** der Stößel (36) mittels Rollkörpern (78) am Gehäuse in Axialrichtung beweglich geführt ist.

2. Aktor nach Anspruch 1, **dadurch gekennzeichnet, dass** ein Dämpfungselement zur Dämpfung des Stößels (36) vorgesehen ist.

3. Aktor nach Anspruch 1 oder 2, **dadurch gekennzeichnet, dass** der Stößel mittels der Rollkörper (78) zwischen zwei Gehäuseteilen axial beweglich geführt ist, die gegeneinander verspannt sind.

4. Aktor nach Anspruch 1, 2 oder 3, **dadurch gekennzeichnet, dass** die Rollkörper als Kugeln (78), Rollen oder Tonnenkörper ausgebildet sind.

5. Aktor nach einem der vorhergehenden Ansprüche, **dadurch gekennzeichnet, dass** der schnelle Antrieb (46) zumindest teilweise in einer Ausnehmung (44) des Stößels (36) aufgenommen ist und mittels eines koaxial zum Stößel angeordneten Dämpfungselementes gedämpft ist.

6. Aktor nach einem der vorhergehenden Ansprüche, **dadurch gekennzeichnet, dass** der schnelle Antrieb (46) als Nanotube-Antrieb ausgebildet ist.

7. Aktor nach einem der Ansprüche 2 bis 6, **dadurch gekennzeichnet, dass** das Dämpfungselement als Squeeze-Film-Dämpfer (60) ausgebildet ist.

8. Aktor nach einem der Ansprüche 5 bis 7, **dadurch gekennzeichnet, dass** der Stößel (36) an einem Festkörpergelenk geführt ist, das vorzugsweise zwei voneinander beabstandete Federaufnahmen (40, 42) aufweist.

9. Aktor nach einem der vorhergehenden Ansprüche, **dadurch gekennzeichnet, dass** der schnelle Antrieb (46) am Gehäuse (38) festgelegt ist und dass der Stößel (36) gegen den schnellen Antrieb (46) mittels eines Federelementes (58) vorgespannt ist.

10. Aktor nach Anspruch 9, **dadurch gekennzeichnet, dass** der Stößel (36) im Bereich eines ersten werkzeugseitigen Endes mittels einer ersten Federaufnahme (40) und im Bereich eines zweiten Endes mittels einer zweiten Federaufnahme (42) am Gehäuse (38) in Axialrichtung beweglich aufgehängt ist.

11. Aktor nach Anspruch 10, **dadurch gekennzeichnet, dass** der schnelle Antrieb (46) ein festes Ende (48) aufweist, das am Gehäuse (38) festgelegt ist, und ein loses Ende (50) aufweist, das mit dem Stößel (36) fest verbunden ist.

12. Aktor nach Anspruch 11, **dadurch gekennzeichnet, dass** der Stößel (36) im Bereich seines zweiten Endes (48) gegen den schnellen Antrieb (46) vorzugsweise mittels eines Federpaketes (58) vorgespannt ist.

13. Aktor nach Anspruch 12, **dadurch gekennzeichnet, dass** das Federpaket (58) Tellerfedern aufweist.

14. Aktor nach einem der vorhergehenden Ansprüche, **dadurch gekennzeichnet, dass** eine Verdrehsicherung für den Stößel (36) vorgesehen ist, die vorzugsweise durch das Federpaket (58) gebildet ist.

15. Aktor nach einem der Ansprüche 7 bis 14, **dadurch gekennzeichnet, dass** der Squeeze-Film-Dämpfer (60) in einem Hohlraum zwischen dem Gehäuse (38) und dem Stößel (36) angeordnet ist.

16. Aktor nach Anspruch 15, **dadurch gekennzeichnet, dass** der Squeeze-Film-Dämpfer (60) zwei koaxiale Flächen aufweist, zwischen denen ein Spalt (62) gebildet ist, in dem ein Fluid eingeschlossen ist.

17. Vorrichtung zur Bearbeitung von Werkstücken, mit einer um ihre Längsachse (25) rotierend antreibbaren Spindel (12), an der eine Aufnahme zum Einspannen eines Werkstückes (16) vorgesehen ist, mit einem Aktor (30), der einen schnellen Antrieb (36) zur Erzeugung einer schnellen Bewegung eines Werkzeugs (32) in einer zur Werkstückoberfläche im Wesentlichen senkrechten Richtung aufweist, wobei der Aktor (30) mittels eines weiteren Antriebes (24) zur Erzeugung eines linearen Vorschubes in einer ersten Richtung (x) entlang einer zu bearbeitenden Werkstückoberfläche positionierbar ist, **gekennzeichnet durch** einen Aktor (30) nach einem der vorhergehenden Ansprüche.

## Claims

1. An actuator for moving a tool, the actuator comprising a housing (38) on which a tappet (36) having a tool holder (34) is movably guided in axial direction, the tappet (36) being movable using a rapid drive (46) which allows an acceleration of more than 100 m/s², which is biased against a restoring force and is, preferably, damped by a damping element, **characterized in that** the tappet (36) is movably guided on the housing in the axial direction via rolling elements (78).

2. The actuator of claim 1, **characterized in that** a damping element is provided for damping the tappet (36).

3. The actuator of claim 1 or 2, **characterized in that** the tappet is movably guided by the rolling elements (78) in an axial direction between two housing elements that are clamped one to the other.

4. The actuator of any of claims 1, 2 or 3, **characterized in that** the rolling elements are balls (78), rollers or spherical-roller elements.

5. The actuator of any of claims 1, 2 or 3, **characterized in that** the rapid drive (46) is received in a recess (44) in the tappet (36), at least in part, and is damped by means of a damping element provided in coaxial arrangement with the tappet.

6. The actuator of any of the preceding claims, **characterized in that** the rapid drive (46) is configured as a nanotube drive.

7. The actuator of any of claims 2 to 6, **characterized in that** the damping element is configured as a squeeze-film damper (60).

8. The actuator as defined in any of claims 5 to 7, **characterized in that** the tappet (36) is guided on a flexure which preferably comprises two mutually spaced spring suspensions (40, 42).

9. The actuator of any of the preceding claims, **characterized in that** the rapid drive (46) is fixed on the housing (38) and that the tappet (36) is biased against the rapid drive (46) by a spring element (58).

10. The actuator of claim 9, **characterized in that** the tappet (36) is movably suspended on the housing (38) in axial direction via a first spring suspension (40) in the area of a first tool-side end of the tappet and via a second spring suspension (42) in the area of the second end.

11. The actuator of claim 10, **characterized in that** the rapid drive (46) comprises a fixed end (48) fixed on the housing (38) and a loose end (50) firmly connected with the tappet (36).

12. The actuator of claim 11, **characterized in that** the tappet (36) is biased toward the rapid drive (46) in the area of its second end (48), preferably by means of a set of springs (58).

13. The actuator as defined in claim 12, **characterized in that** the set of springs (58) comprises disc springs.

14. The actuator of any of the preceding claims, **characterized in that** the tappet (36) is protected against rotation, preferably by the set of springs (58).

15. The actuator as defined in any of claims 7 to 14, **characterized in that** the squeeze-film damper (60) is arranged in a cavity between the housing (38) and the tappet (36).

16. The actuator as defined in claim 15, **characterized in that** the squeeze-film damper (60) comprises two coaxial surfaces which form between them a gap (62) in which a fluid is enclosed.

17. A device for machining work pieces comprising a spindle (12) configured to be driven rotatingly about its longitudinal axis (25), the spindle being provided with a holder for chucking a work piece (16), having an actuator (30) which comprises a rapid drive (36) for producing a rapid movement of a tool (32) in a direction substantially perpendicular to the work piece surface, the actuator (30) being capable of being positioned along a work piece surface to be machined by means of a further drive (24) intended to produce a linear feed motion in a first direction (x), **characterized by** an actuator (30) according to any of the preceding claims.

## Revendications

1. Actionneur pour déplacer un outil, avec un boîtier (38) sur lequel un coulisseau (36) avec un support d'outil (34) est guidé de façon mobile dans le sens axial, le coulisseau (36) étant déplaçable au moyen d'un entraînement rapide (46), permettant une accélération supérieure à 100 m/s², qui est précontraint contre une force de rappel, **caractérisé en ce que** le coulisseau (36) est guidé de façon mobile sur le boîtier, dans le sens axial, à l'aide de galets (78).

2. Actionneur selon la revendication 1, **caractérisé en ce qu'**un élément amortisseur est prévu pour amortir le coulisseau (36).

3. Actionneur selon la revendication 1 ou 2, **caractérisé en ce que** le coulisseau est guidé à l'aide des galets (78), de façon mobile axialement, entre deux parties de boîtier.

4. Actionneur selon la revendication 1, 2 ou 3, **caractérisé en ce que** les galets sont conçus comme des billes (78), des rouleaux ou des corps de tonneau.

5. Actionneur selon l'une des revendications précédentes, **caractérisé en ce que** l'entraînement rapide (46) est au moins partiellement admis dans un évidement (44) du coulisseau (36) et amorti à l'aide d'un élément amortisseur disposé de façon coaxiale par rapport au coulisseau.

6. Actionneur selon l'une des revendications précédentes, **caractérisé en ce que** l'entraînement rapide (46) est conçu comme un entraînement à nanotubes.

7. Actionneur selon l'une des revendications 2 à 6, **caractérisé en ce que** l'élément amortisseur est conçu comme un amortisseur à film écrasé (60).

8. Actionneur selon l'une des revendications 5 à 7, **caractérisé en ce que** le coulisseau (36) est guidé sur une articulation de corps fixe, comportant de préférence deux sièges de ressort (40, 42) espacés l'un de l'autre.

9. Actionneur selon l'une des revendications précédentes, **caractérisé en ce que** l'entraînement rapide (46) est fixé sur le boîtier (38) et **en ce que** le coulisseau (36) est précontraint contre l'entraînement rapide (46) à l'aide d'un élément à ressort (58).

10. Actionneur selon la revendication 9, **caractérisé en ce que** le coulisseau (36) est suspendu de façon mobile dans le sens axial au boîtier (38), dans la région d'une première extrémité côté outil, au moyen d'un premier siège de ressort (40), et dans la région d'une deuxième extrémité, au moyen d'un deuxième siège de ressort (42).

11. Actionneur selon la revendication 10, **caractérisé en ce que** l'entraînement rapide (46) comporte une extrémité fixe (48) fixée au boîtier (38) et une extrémité libre (50) reliée fixement au coulisseau (36).

12. Actionneur selon la revendication 11, **caractérisé en ce que** le coulisseau (36) est précontraint contre l'entraînement rapide (46) dans la région de sa deuxième extrémité (48), de préférence au moyen d'un groupe de ressorts (58).

13. Actionneur selon la revendication 12, **caractérisé en ce que** le groupe de ressorts (58) comporte des rondelles-ressort.

14. Actionneur selon l'une des revendications précédentes, **caractérisé en ce qu'**un élément de blocage en rotation, formé de préférence par le groupe de ressorts (58), est prévu pour le coulisseau (36).

15. Actionneur selon l'une des revendications 7 à 14, **caractérisé en ce que** l'amortisseur à film écrasé (60) est disposé dans un espace creux entre le boîtier (38) et le coulisseau (36).

16. Actionneur selon la revendication 15, **caractérisé en ce que** l'amortisseur à film écrasé (60) présente deux surfaces coaxiales, entre lesquelles est formée une fente (62) renfermant un fluide.

17. Dispositif pour le traitement de pièces usinées, avec une broche (12) entraînable par rotation autour de son axe longitudinal (25), sur laquelle est prévue une admission pour le serrage d'une pièce usinée (16), avec un actionneur (30) comportant un entraînement rapide (36) destiné à produire un déplacement rapide d'un outil (32) dans un sens essentiellement perpendiculaire à la surface de pièce usinée, dans lequel l'actionneur (30) peut être positionné le long d'une surface de pièce usinée à traiter, au moyen d'un entraînement supplémentaire (24) pour produire un avancement linéaire dans un premier sens (x), **caractérisé par** un actionneur (30) selon l'une des revendications précédentes.
